# DEMANDE DE BREVET EUROPEEN

(11) **EP 0 541 438 A1**
(43) Date de publication de la demande: **12.05.1993**
(21) Numéro de dépôt: 92402981.2
(22) Date de dépôt: 04.11.1992
(51) Int. Cl.: G01K 13/00, G01K 1/14, G01K 11/20

(54) **Dispositif de mesure de la température d'un échantillon**

(30) Priorité: 06.11.1991 FR 9113687
(71) Demandeur: COMMISSARIAT A L'ENERGIE ATOMIQUE, F-75015 Paris (FR)
(72) Inventeur: Daviet, Jean-François, F-74960 Cran-Gevrier (FR); Lassagne, Pierre, F-38450 Saint Georges-de-Commiers (FR); Montmayeul, Philippe, F-38190 Brignoud (FR); Peccoud, Louise, F-38640 Claix (FR)
(74) Mandataire: Signore, Robert

(57) **Abrégé**

L'invention concerne un dispositif pour mesurer la température notamment d'un substrat. Ce dispositif comprend deux fibres optiques, une fibre supérieure (5) apte à se déplacer et une fibre inférieure (6), disposées dans le prolongement l'une de l'autre et écartées l'une de l'autre par un gap (7). Ces fibres optiques sont aptes à transmettre un premier signal lumineux, envoyé par une source lumineuse à un élément excitable (8) disposé à l'extrémité (5a) de la fibre supérieure et un second signal lumineux renvoyé par l'élément excitable (8) à un dispositif d'analyse. En outre, l'invention comprend des moyens élastiques (9, 10) montés sur la fibre supérieure pour assurer un contact à pression constante entre le substrat et l'élément excitable. Il comprend de plus des moyens (11) pour régler la pression dudit contact et des moyens (15) pour ajuster le gap entre les deux fibres.

L'invention s'applique à la microélectronique, pour des dépôts, des gravures ou tout autre traitement de surface.

## Description

La présente invention concerne un dispositif permettant de mesurer la température d'un substrat ou de toute autre sorte d'échantillon.

Ce dispositif trouve de nombreuses applications notamment dans le domaine industriel de l'électronique et, plus particulièrement, dans des machines de traitement micro-électronique permettant d'effectuer, par exemple, des dépôts, des gravures, des implantations ioniques ou tout autre traitement de surface.

En effet, dans de nombreux types de traitements microélectroniques, il est intéressant, voire nécessaire, de connaître la température du substrat à traiter. Pour ces mesures de températures, l'invention propose justement un dispositif à fibres optiques, du type sonde à fibres optiques, permettant de mesurer la température d'un substrat dans un milieu hostile tel qu'un milieu où règnent des rayonnements électromagnétiques ou des gaz réactifs.

De plus, pour effectuer ces mesures, le dispositif selon l'invention a l'avantage de ne nécessiter qu'un faible contact entre ledit dispositif et la surface du substrat dont on veut mesurer la température.

En effet, il comporte deux fibres optiques alignées, mais relativement distantes, de façon à ce que le contact entre la surface du substrat et ledit dispositif ne soit pas rigide.

De façon plus précise, la présente invention concerne un dispositif de mesure de la température d'un échantillon comprenant :
- deux fibres optiques disposées dans le prolongement l'une de l'autre, à savoir une fibre supérieure apte à se déplacer et une fibre inférieure fixe, distantes l'une de l'autre et aptes à transmettre des signaux lumineux ;
- un ensemble de positionnement des fibres optiques ;
- des moyens d'analyse pour analyser les signaux lumineux transmis par les fibres optiques ; et
- des moyens élastiques montés sur la fibre supérieure pour assurer un contact à pression constante entre l'échantillon et la fibre supérieure.

Avantageusement, le dispositif comprend en outre des moyens de réglage permettant de régler la pression du contact entre l'échantillon et la fibre supérieure.

Plus précisément, ces moyens de réglage comporte un manchon, concentrique à la fibre optique supérieure, sur lequel s'appuient les moyens élastiques et qui est disposé à l'intérieur de l'ensemble de positionnement selon une position réglable par rapport audit ensemble.

De façon avantageuse, le dispositif comprend également des moyens d'ajustement permettant d'ajuster la distance séparant les fibres optiques inférieure et supérieure.

Ces moyens d'ajustement comprennent une pièce cylindrique entourant la fibre inférieure, apte à être solidarisée avec ladite fibre, et disposée à l'intérieur de l'ensemble de positionnement selon une position réglable par rapport audit ensemble.

De plus, ces moyens d'ajustement comportent un manchon cylindrique logé dans la pièce cylindrique de façon coaxiale et dont l'une des extrémités s'appuie sur un épaulement d'un alésage de ladite pièce cylindrique.

De façon plus précise, les moyens d'ajustement comportent en outre une férule, disposée entre l'épaulement et l'extrémité du manchon et entourant la fibre optique inférieure. Ce manchon associé à la férule en compression permet de fixer la fibre inférieure dans la pièce cylindrique.

Selon un mode de réalisation de l'invention, le dispositif comprend en outre un élément excitable par un signal lumineux incident, positionné à une des extrémités de la fibre supérieure, et apte à être en contact avec l'échantillon et à émettre un second signal lumineux représentatif de la température de l'échantillon. Dans ce cas, il comprend également une source lumineuse pour envoyer le signal incident à une des extrémités de la fibre inférieure.

Selon l'invention, le dispositif comprend de plus des joints toriques disposés dans l'ensemble de positionnement et assurant une étanchéité.

Une application du dispositif selon l'invention consiste en un dispositif de mesure de la température d'un substrat dans une machine de traitement micro-électronique.

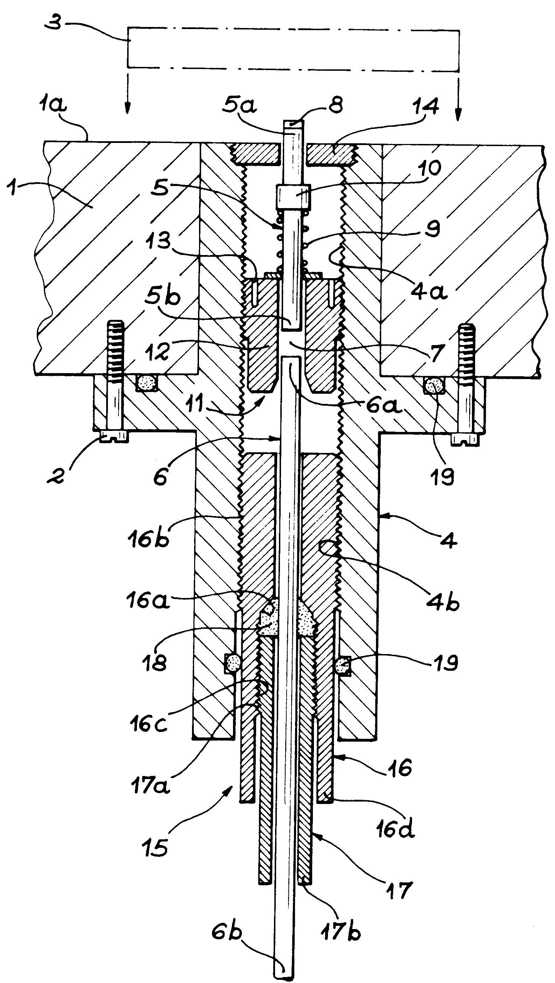

D'autres avantages et caractéristiques de l'invention ressortiront de la description qui va suivre, donnée à titre illustratif, mais nullement limitatif, en référence au dessin, dans lequel la figure unique représente le dispositif de mesure, à pression constante, de la température d'un substrat.

Dans la description qui va suivre, on prendra comme exemple, la mesure de température d'un substrat à l'aide d'un dispositif comportant un élément excitable par une source lumineuse, étant bien entendu que le dispositif de l'invention peut s'appliquer à toutes autres sortes d'échantillons qu'un substrat.

En effet, selon un mode de réalisation de l'invention, pour la mesure de températures inférieures à sensiblement 100°C, on utilise, pour obtenir un signal analysable, un élément excitable positionné à une extrémité de la fibre supérieure et une source lumineuse apte à exciter l'élément excitable.

Selon un autre mode de réalisation, pour des températures supérieures à sensiblement 100°C, l'échantillon émet un signal lumineux suffisant pour être analysé par des moyens d'analyse de signaux lumineux, ou moyens de pyrométrie.

Selon l'exemple de réalisation proposé, le dispositif représenté sur la figure, est disposé à l'intérieur d'une enceinte à vide qui n'a pas été représentée sur la figure par mesure de simplification de ladite figure.

Sur cette figure, on a représenté le porte-substrat 1 à l'intérieur duquel s'introduit le dispositif selon l'invention. Ce dispositif peut être fixé au porte-substrat 1 au moyen, par exemple, de vis de fixation 2. Au-dessus du porte substrat 1, on peut voir le substrat 3, dans une position de mise en place dudit substrat 3 sur le porte-substrat 1 : les flèches représentées sur la figure montrent que le substrat 3 est en train d'être posé sur le porte-substrat 1.

Le dispositif de l'invention comprend un ensemble de positionnement 4, appelé également enceinte, à l'intérieur duquel se trouvent deux fibres optiques, à savoir une fibre optique supérieure 5 et une fibre optique inférieure 6. Ces deux fibres optiques 5 et 6 sont alignées, c'est-à-dire disposées bout à bout l'une par rapport à l'autre, et espacées d'une distance relativement faible que l'on nommera gap et que l'on référencera 7.

En effet, l'existence de deux fibres optiques misent bout à bout permet une certaine souplesse dans le dispositif, qui comprend ainsi une partie souple, à savoir la fibre supérieure 5, et une partie fixe, à savoir la fibre inférieure 6. Pour obtenir cette souplesse, les fibres 5 et 6, ne sont pas en contact l'une avec l'autre. Elles sont espacées par le gap 7. Cependant, ce gap 7 séparant lesdites fibres doit être très faible lorsque le substrat est en contact avec le dispositif (sensiblement inférieur ou égal à un dixième de millimètre) afin de ne pas perturber trop fortement la transmission des signaux conduits par les fibres optiques 5 et 6. En effet, ces fibres optiques ont pour rôle, notamment, de transmettre des signaux lumineux provenant d'une source lumineuse non représentées sur la figure. Cette transmission des signaux se fait correctement malgré le gap 7.

Des moyens élastiques 9, 10 assurent un contact souple et une pression constante entre le substrat 3 et le dispositif. Ces moyens élastiques comportent un ressort 9 monté autour de la fibre supérieure 5 et fixé, par sa partie supérieure, sur ladite fibre, par une bride de fixation 10.

A l'extrémité supérieure 5a de la fibre supérieure 5, est disposé un élément 8 excitable par signal lumineux. Cet élément 8, par exemple un élément de phosphore, est apte à entrer en contact avec le substrat 3 lorsque ledit substrat 3 est posé sur le porte-substrat 1. En effet, à vide, c'est-à-dire lorsqu'il n'y a pas de substrat sur le porte-substrat 1, l'élément de phosphore 8 est positionné au-dessus dudit porte-substrat 1. Cet élément de phosphore 8 étant en appui indirect sur le ressort 9 (car disposé sur la fibre 5, elle-même montée dans le ressort 9), lors de la pose du substrat 3 sur le porte-substrat 1, ledit élément 8 se trouve escamoté à la hauteur de la surface la dudit porte-substrat 1 et son contact avec le substrat est assuré. Le poids, même léger, du substrat 3 entraîne le déplacement vertical de la fibre 5 et donc le contact de l'élément de phosphore 8 avec ledit substrat avec élimination de toute surépaisseur possible entre le substrat et le porte-substrat.

Lorsque le contact, même un contact très léger, est établi entre ces deux éléments, l'élément de phosphore 8 peut être excité par un signal lumineux envoyé par la source lumineuse à travers la fibre optique inférieure 6 et la fibre optique supérieure 5. Cet élément de phosphore 8 renvoie un second signal lumineux de désexcitation, à travers la fibre optique supérieure 5 et la fibre optique inférieure 6, à un dispositif d'analyse relié à la fibre inférieure 6, mais non représenté sur la figure pour simplifier ladite figure.

La température du substrat 3 peut alors être corrélée au signal lumineux de désexcitation de l'élément 8 par le dispositif d'analyse qui détermine alors la température mesurée.

Cependant, la pression excercée par le substrat 3 sur la fibre supérieure 5, lorsque l'on pose ledit substrat sur le porte-substrat 1, est variable et dépend du poids du substrat. Un dispositif de réglage 11 permet avantageusement de faire varier la pression subie par le ressort 9, cette pression dépendant du poids du substrat 3.

Ce dispositif de réglage 11 comprend un manchon 12, c'est-à-dire une pièce cylindrique entourant la partie inférieure de la fibre supérieure 5 et située à l'intérieur de l'enceinte 4. La paroi intérieure de cette enceinte 4 est, au moins en partie, filetée en 4a et 4b. De même, la paroi extérieure du manchon 12 est au moins en partie filetée de façon à pouvoir être vissée ou dévissée par rapport à la partie filetée 4a de l'enceinte 4. Dans la partie supérieure du manchon 12, des entailles verticales 13 permettent d'introduire dans ledit manchon, un outil de réglage de forme adaptée. Cet outil de réglage peut être simplement une pièce cylindrique, apte à s'enfiler dans l'enceinte 4 autour de la fibre supérieure 5. Il est terminé par des dents pouvant s'introduire dans les entailles 13 du dispositif de réglage 11. Cet outil permet ainsi de tourner le manchon et donc de visser ou de dévisser ledit manchon par rapport à la paroi filetée 4a de l'enceinte 4, le manchon pouvant ainsi monter ou descendre à l'intérieur de l'enceinte.

On comprend bien, en regardant le dispositif 11 de la figure, que si l'on remonte, à l'aide de l'outil de réglage, le manchon 12 par rapport à l'enceinte 4, le ressort 9 sera plus compressé et donc imposera une pression plus forte du substrat 3 sur l'élément de phosphore 8. Au contraire, si l'on descend le manchon 12 vers l'extrémité supérieure 6a de la fibre optique inférieure, le ressort 9 sera plus détendu et la pression qu'il imposera au substrat 3 sur l'élément de phosphore 8 sera plus faible. Ainsi, il est possible d'obtenir entre le substrat 3 et l'élément phosphore 8, une pression réglable et constante.

Selon le mode de réalisation décrit de l'invention, un anneau de guidage 14 est disposé autour de la fibre supérieure 5, sensiblement à la hauteur de la surface supérieure la du porte-substrat 1. Cet anneau de guidage 14 permet, comme son nom l'indique, de guider la fibre optique supérieure 5, c'est-à-dire d'assurer son positionnement de façon alignée par rapport à la fibre optique inférieure 6 fixe.

La partie creuse de l'anneau de guidage 14 a un diamètre sensiblement supérieur au diamètre de la fibre optique supérieure 5 de façon à permettre une certaine mobilité de ladite fibre. Ce diamètre de la partie creuse de l'anneau de guidage 14 doit être, cependant, inférieur à la taille externe de la bride de fixation 10 du ressort 9 sur la fibre afin d'empêcher, éventuellement, la fibre supérieure 5 de quitter son logement, c'est-à-dire de quitter l'enceinte 4, lorsque le substrat 3 a été retiré de dessus le porte-substrat 1.

Selon un mode de réalisation de l'invention, tel que représenté sur la figure, la paroi extérieure de l'anneau de guidage 14 est filetée de façon à pouvoir être déplacée verticalement par rapport à l'enceinte 4, ou retirée hors de ladite enceinte.

Pour une meilleure transmission des signaux lumineux entre la fibre inférieure 6 et la fibre supérieure 5, il est judicieux de pouvoir ajuster le gap 7. Des moyens d'ajustage 15 assurent ce rôle d'ajustement de la distance entre les deux fibres optiques 5 et 6. Ce dispositif d'ajustement 15 comprend une première pièce cylindrique 16 disposée à l'intérieur de l'enceinte 4 et entourant la fibre optique inférieure 6. Cette première pièce cylindrique 16 comprend un épaulement 16a contre lequel est appuyée une ferrule 18. De plus, ce dispositif d'ajustement 15 comprend une seconde pièce cylindrique 17 venant se loger sous l'épaulement 16a de la première pièce cylindrique 16 et, plus précisément, venant se loger sous la ferrule 18. La première pièce cylindrique 16 comprend sur sa paroi extérieure une partie 16b filetée emboîtée dans la partie filetée 4b de la paroi intérieure de l'enceinte 4. De plus, cette pièce cylindrique 16 comprend sur sa paroi interne, sous l'épaulement 16a, une seconde partie filetée 16c. Parallèlement la seconde pièce cylindrique 17 comprend sur sa paroi externe une partie filetée 17a emboîtée dans la partie filetée 16c de la pièce cylindrique 16.

Pour faciliter l'ajustement du gap 7, la pièce cylindrique 16 est d'une longueur telle qu'une partie 16d de ladite pièce sort de l'enceinte 4 par l'extrémité inférieure de ladite enceinte. De même, la seconde pièce cylindrique 17 a une longueur telle qu'une partie 17b de ladite pièce dépasse de la première pièce cylindrique 16. Ainsi, des outils du type clé à molette ou clé à six pans (ou autre type de clé) suffisent pour visser ou dévisser les pièces cylindriques 16 et 17 par rapport, respectivement, à l'enceinte 4 et à la pièce cylindrique 16.

En agissant, à l'aide d'une clé, sur la partie 17b de la pièce cylindrique 17, c'est-à-dire en vissant la partie filetée 17a sur la partie filetée 16c, la ferrule 18 logée sous l'épaulement 16a de la pièce cylindrique 16 se trouve écrasée. Lorsque cette ferrule 18 est écrasée, les pièces cylindriques 16 et 17 sont rendues solidaires de la fibre optique inférieure 6. Rendue ainsi solidaire de la pièce cylindrique 16, la fibre optique inférieure 6 est déplacée en même temps que la pièce 16 lorsqu'un utilisateur agit sur la partie 16d. Cette férule 18 peut, dans certaines applications, permettre d'obtenir l'étanchéité de la fibre inférieure 6 au niveau de cette férule.

Par ailleurs, dans le cas où le dispositif doit être étanche, la férule est elle-même étanche.

L'étanchéité du dispositif est nécessaire lorsqu'une différence de pression existe entre les deux extrémités du dispositif. Ceci est le cas par exemple lorsque le dispositif a une extrémité en contact avec un substrat disposé dans une enceinte à pression réduite et l'autre extrémité à pression atmosphérique.

Sur la figure, on a également représenté des joints toriques 19 assurant, pour certaines applications de l'invention, une étanchéité par rapport au milieu extérieur. En effet, dans le cas d'une application où l'enceinte sous vide, citée en début de description, entoure uniquement le substrat et le porte-substrat et où une partie de la sonde selon l'invention se situe en milieu extérieur (c'est-à-dire soumis à la pression atmosphérique, par exemple), les joints toriques 19 assurent l'étanchéité entre le milieu sous vide et le milieu extérieur. Ces joints toriques ont donc pour intérêt de permettre l'utilisation de l'invention dans des milieux soumis simultanément à différentes pressions.

Ces joints toriques sont situés, par exemple, au niveau des vis de fixation 2 de l'enceinte 4 sur le porte-substrat 1 et entre l'enceinte 4 et la pièce cylindrique 16, à une hauteur intermédiaire entre le filetage 4b et l'extrémité inférieure de l'enceinte 4.

Ainsi, pour mesurer la température d'un substrat, la source lumineuse, non représentée sur la figure mais déjà citée dans la description, envoie un signal lumineux à la fibre optique inférieure 6 qui conduit ce signal lumineux jusqu'à la fibre optique supérieure 5. A la réception de ce signal lumineux, l'élément de phosphore 8 est excité. Il se désexcite ensuite en réémettant un second signal lumineux qui est capté par la fibre optique supérieure 5 et conduit par ladite fibre jusqu'à la fibre optique inférieure 6 qui, elle-même, transmet ce second signal lumineux à un dispositif d'analyse. Ce dispositif d'analyse corrèle le signal de désexcitation du phosphore renvoyé par ledit élément 8 à la température du substrat 3.

Dans la description qui précède, on a décrit le dispositif selon l'invention, comme comprenant deux fibres optiques, à savoir, une fibre optique supérieure 5 et une fibre optique inférieure 6. On pourrait, cependant, considérer que ce dispositif ne comprend qu'une seule fibre optique qui aurait été divisée en deux parties, la partie supérieure 5 et la partie inférieure 6, ces deux parties étant séparées par le gap 7. La mise en oeuvre du dispositif est identique quel que soit le mode de réalisation choisi.

Le dispositif selon l'invention, décrit précédemment, peut être réalisé pour un très grand nombre de types de fibres optiques. De plus, il permet la mesure de températures variant sensiblement de -200°C à +1 000°C.

De plus, le réglage de la pression du ressort, ainsi que l'ajustement du gap permettent d'utiliser ce dispositif pour une large gamme d'échantillons, à savoir des échantillons d'un poids très faible vallant à peine quelques grammes, et sans restriction sur la limite supérieure de la gamme.

## Revendications

1. Dispositif de mesure de la température d'un échantillon, caractérisé en ce qu'il comprend :
- deux fibres optiques, une fibre supérieure (5) apte à se déplacer et une fibre inférieure (6), disposées dans le prolongement l'une de l'autre, distantes l'une de l'autre et aptes à transmettre des signaux lumineux ;
- un ensemble (4) de positionnement des fibres optiques ;
- des moyens d'analyse pour analyser le signal transmis par les fibres optiques ; et
- des moyens élastiques (9, 10) montés sur la fibre supérieure pour assurer un contact à pression constante entre l'échantillon et la fibre supérieure.

2. Dispositif selon la revendication 1, caractérisé en ce qu'il comprend en outre des moyens de réglage (11) pour régler la pression du contact entre l'échantillon et la fibre supérieure.

3. Dispositif selon la revendication 2, caractérisé en ce que les moyens de réglage comportent un manchon (12) concentrique à la fibre optique supérieure, sur lequel s'appuyent les moyens élastiques et qui est disposé à l'intérieur de l'ensemble de positionnement selon une position réglable par rapport audit ensemble.

4. Dispositif selon l'une quelconque des revendications précédentes, caractérisé en ce qu'il comprend de plus des moyens d'ajustement (15) pour ajuster la distance séparant les fibres inférieure et supérieure.

5. Dispositif selon la revendication 4, caractérisé en ce que les moyens d'ajustement comprennent une pièce cylindrique (16) entourant la fibre inférieure, apte à être solidarisée avec ladite fibre, et disposée à l'intérieur de l'ensemble de positionnement selon une position réglable par rapport audit ensemble.

6. Dispositif selon la revendication 5, caractérisé en ce que les moyens d'ajustement comportent de plus un manchon (17) cylindrique logé dans la pièce cylindrique coaxialement et dont l'une des extrémités s'appuie sur un épaulement (16a) d'un alésage de la pièce cylindrique.

7. Dispositif selon la revendication 6, caractérisé en ce que les moyens d'ajustement comportent en outre une férule (18), disposée entre l'épaulement et l'extrémité du manchon, et entourant la fibre optique inférieure.

8. Dispositif selon l'une quelconque des revendications précédentes, caractérisé en ce qu'il comporte en outre un élément (8) excitable par un signal lumineux incident, positionné à une des extrémités (5a) de la fibre supérieure, et apte à être en contact avec l'échantillon (3) et à émettre un second signal lumineux représentatif de la température de l'échantillon.

9. Dispositif selon la revendication 8, caractérisé en ce qu'il comporte de plus une source lumineuse pour envoyer le signal incident à une des extrémités (6b) de la fibre inférieure.

10. Dispositif selon l'une quelconque des revendications précédentes, caractérisé en ce qu'il comprend en outre des joints toriques (19) disposés dans l'ensemble de positionnement et assurant une étanchéité.

11. Dispositif de mesure de la température d'un substrat dans une machine de traitement microélectronique, caractérisé en ce qu'il consiste en un dispositif selon l'une quelconque des revendications précédentes.
